# EUROPEAN PATENT SPECIFICATION

(11) **EP 1 640 469 B1**
(45) Date of publication and mention of the grant of the patent: **02.04.2014**
(21) Application number: 04746349.2
(22) Date of filing: 24.06.2004
(51) Int. Cl.: B22F 7/00

(54) **IRON BASE SINTERED ALLOY EXHIBITING HIGH SURFACE DENSIFICATION AND HIGH SURFACE HARDNESS, AND METHOD FOR PRODUCTION THEREOF**
AUF EISEN BASIERENDE SINTERLEGIERUNG MIT HOHER OBERFLÄCHENVERDICHTUNG UND HOHER OBERFLÄCHENHÄRTE UND HERSTELLUNGSVERFAHREN DAFÜR
ALLIAGE FRITTE A BASE DE FER, PRESENTANT UNE DENSITE SUPERFICIELLE ET UNE DURETE SUPERFICIELLE ELEVEES, ET SON PROCEDE DE PRODUCTION

(30) Priority: 27.06.2003 JP 2003183802; 27.06.2003 JP 2003183803
(43) Date of publication of application: 29.03.2006
(73) Proprietor: Diamet Corporation, Niigata-shi Niigata-ken (JP)
(72) Inventor: KAWASE, Kinya c/o Mitsubishi Materials Corporation, Niigata-shi, Niigata 950-8064 (JP); NAKAI, Takashi c/oMitsubishi Materials Corporation, Niigata-shi, Niigata 950-8064 (JP)
(74) Representative: HOFFMANN EITLE
(86) International application number: PCT/JP2004/008880
(87) International publication number: WO 2005/001150

(56) References cited:
- EP-A- 1 563 986
- EP-A1- 1 170 075
- EP-A1- 1 199 124
- EP-A1- 1 344 840
- WO-A-97/48783
- DE-B- 1 045 437
- JP-A- 2001 316 780
- JP-A- 2004 167 582

## Description

### BACKGROUND OF THE INVENTION

### 1. Technical Field

The present invention relates to an iron base sintered alloy composed of a surface layer portion of the iron base sintered alloy (hereinafter, referred to as "iron base sintered alloy surface layer portion") having a thickness in a range of 1 µm to 2 mm from a surface of the iron base sintered alloy; and an inner portion of the iron base sintered alloy (hereinafter, referred to as "iron base sintered alloy inner portion") located inside the iron base sintered alloy surface layer portion, the surface layer portion of which contains both potassium (K) and sodium (Na), and producing method thereof. The iron base sintered alloy is available particularly for mechanical parts requiring surface hardness and wear resistance, for example, sprockets, gears, rotors, inner races, outer races etc. Furthermore, since having highly densified surfaces, the iron base sintered alloy of the invention is available for mechanical parts made of the iron base sintered alloy required plating on the surface.

### 2. Related Art

In general, it is well-known that an iron base sintered alloy has been used for a member for various mechanical parts, and the iron base sintered alloy is produced by sintering a powder compact, which is fabricated by mixing a metallic salt of a high fatty acid such as zinc stearate, calcium stearate, lithium stearate etc. with the iron base alloy powder as a lubricant and then filling the mixture into a cavity of a pressing die for press-shaping.

However, the powder compact obtained by pressing the powder mixed with the conventional metallic salt of a high fatty acid, filled in the cavity of the pressing die, contains a great amount of lubricant, thereby the powder compact cannot have a high density. In addition, the lubricant remaining in the iron base sintered alloy deteriorates the mechanical strength of the iron base sintered alloy produced by sintering the powder compact obtained by the above method.

On the other hand, when a small amount of lubricant is added to the iron base alloy powder in order to fabricate the powder compact containing a small amount of lubricant, and the iron base sintered alloy having excellent mechanical strength is produced by sintering the powder compact containing a small amount of lubricant, the shortage of the amount of lubricant leads to the lack of lubricity, thereby the pressed powder compact is hard to remove from the pressing die, and the yield decreases due to inferior powder compact.

In this case, in order to decrease the difficulty in removing the powder compact from the pressing die due to the lack of the lubricant, a high fatty acid lubricant including the metallic salt of a high fatty acid (for example, lithium stearate, calcium stearate, or zinc stearate) suspended on a solvent is applied to an inner surface of the cavity of the pressing die, and the die is heated up to 100°C or more to form a coat of the metallic acid of a high fatty acid by evaporating the solvent. After that, the iron base sintered alloy powder containing a smaller amount of the lubricant than usual is filled in the cavity, on the inner surface of which the coat of the metallic acid of a high fatty acid is formed, and then pressed at a pressure of 600 MPa or more so as to fabricate the powder compact. Then, an iron salt coat of a high fatty acid such as a monomolecular coat of iron stearate is generated on the surface of the powder compact, thereby a friction between the powder compact and the die is reduced, and a pressure requiring for the removal of the powder compact decreases, thereby the powder compact can be removed from the die easily. Furthermore, since the powder compact is pressed at a high pressure of 600 MPa or more, powder compact having high density can be produced (See Patent No. 3309970).

Similar iron-based sintered alloy composition and production route are disclosed in EP-A 1563 986 and DE 1045 437.

According to the above method, powder compact having a small amount of the lubricant and a high density can be obtained, and a force required to remove the powder compact from the press mold can be decreased since the removal of the powder compact is facilitated. Furthermore, the powder compact rarely breaks during the removal. As a result, excellent powder compact can be fabricated efficiently and excellent iron base sintered alloy can be produced by sintering the powder compact.

However, the lubricant coat obtained by applying the high fatty acid lubricant including the solid metallic salt of a solid-state high fatty acid such as zinc stearate, calcium state, lithium stearate or the like, which are solid powder, suspended in water to the inner surface of the cavity of the pressing die is formed as a solid powder coat on the inner surface of the cavity, thereby the coat cannot be densified on the inner surface of the cavity of the pressing die and adhered to the inner surface of the cavity sufficiently. As a result, there is a problem in that a stable lubricant coat is hard to form.

### SUMMARY

Therefore, the present inventors have studied the way of forming denser lubricant coat on the inner surface of the cavity of the pressing die from the above viewpoints and, finally, found out the followings;
(a) a solution solving a soluble potassium phosphate metallic salt and/or sodium phosphate metallic salt in a solvent is made. The solution is adopted as a lubricant and applied to an inner surface of a cavity of a pressing die that is heated higher than a temperature at which the solvent of the lubricant is evaporated. Then, since the pressing die is heated at such a high temperature that the solvent can be evaporated, the solvent contained in the lubricant is evaporated, and the potassium sulfate salt and/or sodium sulfate salt are/is crystallized onto the inner surface of the cavity of the pressing die, so that a crystallized coat of potassium sulfate salt and/or sodium sulfate salt is formed on the inner surface of the cavity of the pressing die. The crystallized coat of potassium sulfate salt and/or sodium sulfate salt formed on the inner surface of the cavity of the pressing die can form an extremely dense lubricant coat and has excellent adhesion as well. As a result, the coat is hardly exfoliated during working.
(b) Raw powder, iron base sintered alloy powder, is filled into the cavity of the pressing die, on the inner surface of which the crystallized coat of potassium sulfate salt and/or sodium sulfate salt is formed, and the filled powder is pressed to form a powder compact. Since the crystallized coat of potassium sulfate salt and/or sodium sulfate salt is formed on the inner surface of the cavity of the pressing die, the powder compact can be drawn out easily from the pressing die. Further, a surface of the obtained powder compact contains potassium (hereinafter, referred to as "K") and/or sodium (hereinafter, referred to as "Na"). When the powder compact containing K and/or Na on the surface thereof is sintered, K and/or Na reduce(s) an iron oxide coat to activate a surface of the iron base alloy powder. Thereby, a dense-surfaced iron base sintered alloy having extremely small open pores (communicating from the surface of the sintered alloy to the inside) on the surface of a sintered body is obtained. The dense-surfaced iron base sintered alloy is increased in surface hardness and thus in surface wear resistance. As such, the iron base sintered alloy is used as a member for mechanical parts such as sprockets, gears, rotors, inner races, outer races or the like which require wear resistance. In addition, highly densified surface makes the iron base sintered alloy available for a member such as mechanical part and magnetic part made of the iron base alloy, which need plating on the surface.
(c) The iron base sintered alloy having highly densified and hardened surface obtained in this way contains K and/or Na in a range of 0.0001 to 1 mass% in an iron base sintered alloy surface layer portion.
(d) Concentrations of K and Na in the iron base sintered alloy surface layer portion are generally detected or not according to depth and surface positions from the surface of the iron base sintered alloy when subjected to high precision analysis, thus showing great deviation. For this reason, it is preferable that the concentrations of K and Na in the iron base sintered alloy surface layer portion are obtained as an average value.
   Alternatively,
(e) a solution solving a soluble potassium phosphate metallic salt and/or sodium phosphate metallic salt in a solvent is made. The solution is adopted as a lubricant and applied to an inner surface of a cavity of a pressing die that is heated higher than a temperature at which the solvent of the lubricant is evaporated. Then, since the pressing die is heated at such a high temperature that the solvent can be evaporated, the solvent contained in the lubricant is evaporated, and the potassium phosphate metallic salt and/or sodium phosphate metallic salt are/is crystallized onto the inner surface of the cavity of the pressing die, so that a crystallized coat of potassium phosphate metallic salt and/or sodium phosphate metallic salt is formed on the inner surface of the cavity of the pressing die. The crystallized coat of potassium phosphate metallic salt and/or sodium phosphate metallic salt which is formed on the inner surface of the cavity of the pressing die can form an extremely dense lubricant coat and has excellent adhesion as well. As a result, the coat is hardly exfoliated during working.
(f) Raw powder, iron base sintered alloy powder, is filled into the cavity of the pressing die on the inner surface of which the crystallized coat of potassium phosphate metallic salt and/or sodium phosphate metallic salt is formed, and the filled powder is pressed to form a powder compact. Since the crystallized coat of potassium phosphate metallic salt and/or sodium phosphate metallic salt is formed on the inner surface of the cavity of the pressing die, the powder compact is possible to easily draw out from the pressing die. Further, a surface of the obtained powder compact has a high concentration of phosphor (hereinafter, referred to as "P") and contains potassium (hereinafter, referred to as "K") and/or sodium (hereinafter, referred to as "Na"). When the powder compact having the high concentration of P on the surface thereof and containing K and/or Na is sintered, the surface having the concentration of P is easily subjected to liquid and α phase sintering, and containing K and/or Na causes an iron oxide coat to be reduced to activate a surface of the iron base alloy powder. Thereby, a dense surface iron base sintered alloy where open pores (communicating from the surface of the sintered alloy to the inside) are extremely small on the surface of a sintered body is obtained. The dense surface iron base sintered alloy is increased in surface hardness and thus in surface wear resistance. As such, the iron base sintered alloy is available as a material for mechanical parts such as sprockets, gears, rotors, inner races, outer races or the like which require wear resistance. In addition, highly densified surface makes the iron base sintered alloy available for mechanical part and magnetic part made of the iron base alloy, which need plating on the surface.
(g) In the iron base sintered alloy having highly densified and hardened surface obtained in this way, a depth portion (hereinafter, referred to as "iron base sintered alloy surface layer portion) located in a range of 1 µm to 2 mm (preferably, a range of 10 µm to 0.5 mm) from the surface of the iron base sintered alloy contains P in an average concentration of 0.01 to 1 mass% (more preferably, 0.02 to 0.5 mass%) higher than a concentration of P contained in a portion (hereinafter, referred to as "iron base sintered alloy inner portion) located inside the iron base sintered alloy surface layer portion. Further, the iron base sintered alloy surface layer portion contains K and/or Na within a range of 0.0001 to 1 mass%.
(h) Concentrations of P, K and Na in the iron base sintered alloy surface layer portion which corresponds to the depth portion located in a range of 1 µm to 2 mm (preferably, a range of 10 µm to 0.5 mm) from the surface of the iron base sintered alloy are generally detected or not according to depth and surface positions from the surface of the iron base sintered alloy when being subjected to high density analysis, thus showing great deviation. For this reason, it is preferable that the concentrations of P, K and Na in the iron base sintered alloy surface layer portion are obtained as an average value.

The present invention is made on the basis of this knowledge, and characterized by:
(1) an iron base sintered alloy having highly densified and hardened surface, including: an iron base sintered alloy surface layer portion having a thickness in a range of 1 µm to 2 mm from a surface of the iron base sintered alloy; and an iron base sintered alloy inner portion, which is the portion other than the iron base sintered alloy surface layer portion, wherein the iron base sintered alloy surface layer portion contains both of K and Na; and
(2) an iron base sintered alloy having highly densified and hardened surface as defined in (1) above, in which the iron base sintered alloy surface layer portion contains K and Na in an average concentration of 0.0001 to 1 mass% in total.

As a material for mechanical parts such as sprockets, gears, rotors, inner races, outer races etc. which require surface wear resistance, it is generally known to use the iron base sintered alloy which contains C of 0.1 to 0.9 mass%, one or at least two of Mo, Ni, Cr and Cu of 0.1 to 10 mass% in total, one or at least two of Mn, Si, V, Nb, W, Al, Ti, Ca and S of 0.1 to 3 mass% in total if necessary, and a balance of Fe and unavoidable impurities. In the iron base sintered alloy of the invention having highly densified and hardened surface, the iron base sintered alloy inner portion is preferably made up of an iron base alloy sintered body having a composition of C: 0.1 to 0.9 mass%, one or at least two of Mo, Ni, Cr and Cu: 0.1 to 10 mass% in total, P: 0.05 mass% (including 0 mass%), one or at least two of Mn, Si, V, Nb, W, Al, Ti, Ca and S: 0.1 to 3 mass% in total if necessary, and balance: Fe and unavoidable impurities, and the iron base sintered alloy surface layer portion is preferably made up of an iron base alloy sintered body having a composition of C: 0.1 to 0.9 mass%, one or at least two of Mo, Ni, Cr and Cu: 0.1 to 10 mass% in total, P: 0.05 mass% (including 0 mass%), one or at least two of Mn, Si, V, Nb, W, Al, Ti, Ca and S: 0.1 to 3 mass% in total if necessary, both of K and Na: 0.0001 to 1 mass% in an average concentration in total, and balance: Fe and unavoidable impurities.

Therefore, preferred embodiments of the invention are the following:
(3) an iron base sintered alloy having highly densified and hardened surface, including: an iron base sintered alloy surface layer portion; and an iron base sintered alloy inner portion, in which the iron base sintered alloy inner portion has a composition of C: 0.1 to 0.9 mass%, one or at least two of Mo, Ni, Cr and Cu: 0.1 to 10 mass% in total, and balance: Fe and unavoidable impurities; and the iron base sintered alloy surface layer portion has a composition of C: 0.1 to 0.9 mass%, one or at least two of Mo, Ni, Cr and Cu: 0.1 to 10 mass% in total, K and Na: 0.0001 to 1 mass% in the average concentration in total, and balance: Fe and unavoidable impurities; and
(4) an iron base sintered alloy having highly densified and hardened surface, including: an iron base sintered alloy surface layer portion; and an iron base sintered alloy inner portion, in which the iron base sintered alloy inner portion has a composition of C: 0.1 to 0.9 mass%, one or at least two of Mo, Ni, Cr and Cu: 0.1 to 10 mass% in total, one or at least two of Mn, Si, V, Nb, W, Al, Ti, Ca and S: 0.1 to 3 mass% in total, and balance: Fe and unavoidable impurities; and the iron base sintered alloy surface layer portion has a composition of C: 0.1 to 0.9 mass%, one or at least two of Mo, Ni, Cr and Cu: 0.1 to 10 mass% in total, one or at least two of Mn, Si, V, Nb, W, Al, Ti, Ca and S: 0.1 to 3 mass% in total, K and Na : 0.0001 to 1 mass% in the average concentration in total, and balance: Fe and unavoidable impurities.

In the iron base sintered alloys (1) to (4) having highly densified and hardened surface of the invention, the iron base sintered alloy surface layer portion has a dense surface and has extremely small pores, and particularly open pores (communicating from the surface of the sintered alloy to the inside) on the surface thereof, thus having open porosity of 5% or less. Therefore, the invention is in preferred embodiments thereof characterized by
(5) an iron base sintered alloy having highly densified and hardened surface, according to any one of the iron base sintered alloys (1), (2), (3) and (4), in which the iron base sintered alloy surface layer portion has open porosity of 5% or less.

The open porosity may be preferably small, more preferably 2% or less, and still more preferably 1% or less.

In the invention, the iron base sintered alloy having highly densified and hardened surface, according to any one of the iron base sintered alloys (1), (2), (3) and (4) may be used as a material for various mechanical parts, and preferably as a material for parts such as sprockets, gears, rotors, inner races, outer races etc. which require strength and undergo surface wear with ease. Therefore, the invention is characterized by:
(6) a mechanical part made of an iron base sintered alloy having highly densified and hardened surface, according to any one of the iron base sintered alloys (1), (2), (3) and (4);
(7) a mechanical part according to the mechanical part (6), which is a sprocket;
(8) a mechanical part according to the mechanical part (6), which is a gear;
(9) a mechanical part according to the mechanical part (6), which is a rotor;
(10) a mechanical part according to the mechanical part (6), which is an inner race; and
(11) a mechanical part according to the mechanical part (6), which is an outer race.

Further, the invention is characterized by:
(12) an iron base sintered alloy having highly densified and hardened surface as defined in (1), in which the iron base sintered alloy surface layer portion has an average concentration of P higher than a concentration of P of the iron base sintered alloy inner portion
(13) an iron base sintered alloy having highly densified and hardened surface as defined in (12) above, in which the average concentration of P of the iron base sintered alloy surface layer portion is higher than the concentration of P of the iron base sintered alloy inner portion by 0.01 to 1 mass%.

As a material for mechanical parts such as sprockets, gears, rotors, inner races, outer races etc. which require surface wear resistance, it is generally known to use the iron base sintered alloy which contains C of 0.1 to 0.9 mass%, one or at least two of Mo, Ni, Cr and Cu of 0.1 to 10 mass% in total, one or at least two of Mn, Si, V, Nb, W, Al, Ti, Ca and S of 0.1 to 3 mass% in total if necessary, and a balance of Fe and unavoidable impurities. It is known that the iron base sintered alloy contains 0.05 mass% (including 0 mass%) of P as an unavoidable impurity. In the iron base sintered alloy of the invention having highly densified and hardened surface, the iron base sintered alloy inner portion is preferably made up of an iron base alloy sintered body containing C: 0.1 to 0.9 mass%, one or at least two of Mo, Ni, Cr and Cu: 0.1 to 10 mass% in total, P: 0.05 mass% (including 0 mass%), one or at least two of Mn, Si, V, Nb, W, Al, Ti, Ca and S: 0.1 to 3 mass% in total if necessary, and balance: Fe and unavoidable impurities, and the iron base sintered alloy surface layer portion is preferably made up of an iron base alloy sintered body containing C: 0.1 to 0.9 mass%, one or at least two of Mo, Ni, Cr and Cu: 0.1 to 10. mass% in total, P: 0.05 mass% (including 0 mass%), one or at least two of Mn, Si, V, Nb, W, Al, Ti, Ca and S: 0.1 to 3 mass% in total if necessary, P: an average concentration higher than a concentration of P contained in the iron base sintered alloy inner portion by 0.01 to 1 mass%, both of K and Na: 0.0001 to 1 mass% in an average concentration in total, and balance: Fe and unavoidable impurities.

Therefore, the invention is characterized by:
(14) an iron base sintered alloy having highly densified and hardened surface as defined (12) above, in which the iron base sintered alloy inner portion is made up of an iron base alloy sintered body having a composition of C: 0.1 to 0.9 mass%, one or at least two of Mo, Ni, Cr and Cu: 0.1 to 10 mass% in total, P: 0.05 mass% or less (including 0 mass%), and balance: Fe and unavoidable impurities, and the iron base sintered alloy surface layer portion has the average concentration of P higher than the concentration of P contained in the iron base sintered alloy inner portion by 0.01 to 1 mass%; and
(15) an iron base sintered alloy having highly densified and hardened surface as defined in (12) above, in which the iron base sintered alloy inner portion is made up of an iron base alloy sintered body having a composition of C: 0.1 to 0.9 mass%, one or at least two of Mo, Ni, Cr and Cu: 0.1 to 10 mass% in total, one or at least two of Mn, Si, V, Nb, W, Al, Ti, Ca and S: 0.1 to 3 mass% in total, P: 0.05 mass% or less (including 0 mass%), and balance: Fe and unavoidable impurities, and the iron base sintered alloy surface layer portion has the average concentration of P higher than the concentration of P contained in the iron base sintered alloy inner portion by 0.01 to 1 mass% and contains K and Na in an average concentration of 0.0001 to 1 mass% in total.

In the iron base sintered alloys (12) to (15) of the invention, the iron base sintered alloy surface layer portion has a dense surface and has extremely small pores, and particularly open pores (communicating from the surface of the sintered alloy to the inside) on the surface thereof, because the surface portion of the powder compact is reduced to undergo liquid and α phase sintering again, thus having open porosity of 5% or less. Therefore, the invention is characterized by
(16) an iron base sintered alloy having highly densified and hardened surface, according to any one of the iron base sintered alloys (12) to (15), in which the iron base sintered alloy surface layer portion has open porosity of 5% or less.

The open porosity may be preferably small, more preferably 2% or less, and still more preferably 1% or less.

In the invention, the iron base sintered alloy having highly densified and hardened surface, according to any one of the iron base sintered alloys (12) to (16) may be used as a material for various mechanical parts, and preferably as a material for parts such as sprockets, gears, rotors, inner races, outer races etc. which require strength and undergo surface wear with ease. Therefore, the invention is characterized by:
(17) a mechanical part made of the iron base sintered alloy according to any one of the iron base sintered alloys (12) to (16).
(18) a mechanical part according to the mechanical part (17), which is a sprocket;
(19) a mechanical part according to the mechanical part (17), which is a gear;
(20) a mechanical part according to the mechanical part (17), which is a rotor;
(21) a mechanical part according to the mechanical part (17), which is an inner race; and
(22) a mechanical part according to the mechanical part (17), which is an outer race.

In the invention, the term "iron base sintered alloy surface layer portion" refers to a portion having a thickness of a range of 1 µm to 2 mm from the surface of the iron base sintered alloy. When the thickness of the iron base sintered alloy surface layer portion is less than 1 µm, it is not favorable because the effect on the improvement of surface and surface hardness is not remarkable. In contrast, when the thickness of the iron base sintered alloy surface layer portion is more than 2 mm, this is also unfavorable because liquid sintering and α phase sintering proceed up to the inner portion of the sintered alloy, and thus dimension precision is lowered, and furthermore it is easy to generate a crack during quenching.

Further, in the invention, the term "iron base sintered alloy inner portion" is a portion located inside the iron base sintered alloy surface layer portion having the thickness of 1 µm to 2 mm from the surface of the iron base sintered alloy.

In the iron base sintered alloy surface having highly densified and hardened surface according to the invention, restricting the average concentration of both of K and Na to 0.0001 mass% or more in total in the iron base sintered alloy surface layer portion is because an effect of reducing and activating a surface oxide coat of iron base sintered alloy raw powder when the average concentration of these ingredients is less than 0.0001 mass%, and thus it is impossible to obtain a dense surface layer portion. Meanwhile, in the iron base sintered alloy surface layer portion, increasing the average concentration of these ingredients higher than 1 mass% is not allowed on the ordinary sintering condition, and particularly fails to increase surface densification. Thus, in the iron base sintered alloy surface having highly densified and hardened surface according to the invention, the average concentration of both of K and Na contained in the iron base sintered alloy surface layer portion is preferably restricted to a range of 0.0001 to 1 mass% in total. In the iron base sintered alloy surface having highly densified and hardened surface according to the invention, restricting the average concentration value of both of K and Na contained in the iron base sintered alloy surface layer portion to a range of 0.02 to 0.5 mass% in total is easy to produce the iron base sintered alloy and is more preferable from the viewpoint of production efficiency.

In the iron base sintered alloy surface exhibiting excellent surface densification, surface hardness and corrosion resistance according to the invention, restricting an average concentration value of P in the iron base sintered alloy surface layer portion to be higher than a concentration of P in the iron base sintered alloy inner portion by 0.01 mass% is because a content of P contained in the ordinary iron base sintered alloy inner portion is extremely small when a difference between the average concentration value of P in the iron base sintered alloy surface layer portion and the concentration of P in the iron base sintered alloy inner portion is less than 0.01 mass%, and thus there is little difference in P content between the iron base sintered alloy surface layer portion and the iron base sintered alloy inner portion, and the P content of the iron base sintered alloy surface layer portion is small. For this reason, the effects on the liquid sintering and α phase sintering are not generated. Thus, the surface of the iron base sintered alloy does not become dense, so that it is impossible to obtain high surface hardness.

Meanwhile, restricting the difference between the P concentration of the iron base sintered alloy and the average value of the P concentration in the iron base sintered alloy inner portion to 1 mass% or less is based on the fact that increasing the P concentration of the iron base sintered alloy surface layer portion enough to exceed 1 mass% is not allowed on the ordinary sintering condition, and that, even when the P concentration of the iron base sintered alloy surface layer portion is increased such that the difference between the average value of the P concentration in the iron base sintered alloy surface layer portion and the P concentration in the iron base sintered alloy inner portion exceeds 1 mass%, the surface densification and surface hardness are not increased. When the average value of the P concentration in the iron base sintered alloy surface layer portion becomes higher than the P concentration in the iron base sintered alloy inner portion by a range of 0.02 to 0.5 mass%, it is easy to produce the iron base sintered alloy. Thus, this is still more preferable from the viewpoint of production efficiency. Further, in the iron base sintered alloy having highly densified and hardened surface according to the invention, restricting the average concentration of both of K and Na to 0.0001 mass% in total in the iron base sintered alloy surface layer portion is based on the fact that, when the average concentration of these ingredients is less than 0.0001 mass%, the effect reducing and activating the surface oxide coat of the iron base sintered alloy raw material powder is insufficient to fail to obtain the dense surface layer portion. On the other hand, when the average concentration of these ingredients is increased enough to exceed 1 mass% in the iron base sintered alloy surface layer portion, this is not allowed on the ordinary sintering condition, and particularly the surface densification is no longer increased. Therefore, in the iron base sintered alloy surface having highly densified and hardened surface according to the invention, the average concentration of both of K and Na contained in the iron base sintered alloy surface layer portion is restricted to a range of 0.0001 to 1 mass%. In the iron base sintered alloy surface having highly densified and hardened surface according to the invention, when the average concentration value of both of K and Na contained in the iron base sintered alloy surface layer portion is restricted to a range of 0.02 to 0.5 mass%, it is easy to produce the iron base sintered alloy. This is still more preferable from the viewpoint of production efficiency.

The iron base sintered alloy (1), (2), (3) or (4) having highly densified and hardened surface can be produced by: forming a powder compact containing K and Na on a surface attached with a potassium sulfate salt and a sodium sulfate salt in a high concentration in total by forming a mixed coat of the potassium sulfate salt and the sodium sulfate salt which acts as a lubricant on an inner surface of a cavity of a pressing die, by filling raw powder of the iron base sintered alloy into the cavity of the pressing die, and by pressing the filled raw powder; and sintering the formed powder compact at a temperature of 1000 to 1300°C.

In order to form the coat of the mixed salt of the potassium sulfate salt and sodium sulfate salt on the inner surface of the cavity of the pressing die, a solution solving the mixed salt of the potassium sulfate salt and sodium sulfate salt in a solvent (e.g. water) is applied to the inner surface of the cavity of the heated pressing die, the solvent (e.g. water) is evaporated, and the mixed salt of the potassium sulfate salt and sodium sulfate salt as the lubricant is crystallized. At this time, because a temperature at which the solvent (e.g. water) is evaporated will do as the temperature of heating the pressing die, the temperature of heating the pressing die may be more than 100°C.

The raw powder used when the iron base sintered alloy having highly densified and hardened surface according to the invention is produced preferably makes use of a mixed powder where C powder is added to adjust a content of C with respect to a known iron base alloy powder having a composition of C: 0.1 to 0.9 mass%, one or at least two of Mo, Ni, Cr and Cu: 0.1 to 10 mass% in total, one or at least two of Mn, Si, V, Nb, W, Al, Ti, Ca and S: 0.1 to 3 mass% in total, and balance: Fe and unavoidable impurities, which is known as raw powder used for producing mechanical parts requiring surface wear resistance such as sprockets, gears, rotors, inner races, outer races and so on.

The iron base sintered alloy (12) to (15) having highly densified and hardened surface can be produced by: forming a powder compact where a surface to which a mixed metallic salt of a potassium phosphate metallic salt and a sodium phosphate metallic salt is attached has a concentration of P higher than that of an inner portion thereof and which contains K and Na on the surface thereof by forming a coat of the mixed metallic salt of the potassium phosphate metallic salt and the sodium phosphate metallic salt which acts as a lubricant, on an inner surface of a cavity of a pressing die, by filling raw powder of the iron base sintered alloy into the cavity of the pressing die, and by pressing the filled raw powder; and sintering the formed powder compact at a temperature of 1000 to 1300°C.

In order to form the mixed metallic salt of the potassium phosphate metallic salt and the sodium phosphate metallic salt on the inner surface of the cavity of the pressing die, a solution solving the mixed metallic salt of the potassium phosphate metallic salt and the sodium phosphate metallic salt in a solvent (e.g. water) is applied to the inner surface of the cavity of the heated pressing die, the solvent (e.g. water) is evaporated, and the mixed metallic salt of the potassium phosphate metallic salt and the sodium phosphate metallic salt as the lubricant is crystallized. At this time, because a temperature at which the solvent (e.g. water) is evaporated will do as the temperature of heating the pressing die, the temperature of heating the pressing die may be more than 100°C.

The mechanical part made of the iron base sintered alloy (16) having highly densified and hardened surface and the iron base sintered alloys (17) to (22) having highly densified and hardened surface may be produced by the same method as that for producing the iron base sintered alloy having highly densified and hardened surface according to the invention.

The raw powder used when the iron base sintered alloy having highly densified and hardened surface according to the invention is produced preferably makes use of a mixed powder where C powder is added to adjust a content of C with respect to a known iron base alloy powder having a composition of C: 0.1 to 0.9 mass%, one or at least two of Mo, Ni, Cr and Cu: 0.1 to 10 mass% in total, P: 0.05 mass% (including 0 mass%), one or at least two of Mn, Si, V, Nb, W, Al, Ti, Ca and S: 0.1 to 3 mass% in total, and balance: Fe and unavoidable impurities, which is known as raw powder used for producing mechanical parts requiring surface wear resistance such as sprockets, gears, rotors, inner races, outer races and so on.

As set forth above, the iron base sintered alloy of the invention has high surface hardness and low open porosity as compared with the conventional iron base sintered alloy having the same ingredient composition, so that it is easy to carry out surface treatment such as plating etc. As a result, the iron base sintered alloy of the invention can be used as a member for various mechanical parts requiring wear resistance, and can make a great contribution to development of mechanical industry.

### DESCRIPTION OF THE EMBODIMENTS

### Embodiment 1

Pressing dies were prepared, each of which had a cavity of a diameter of 11 mm and a height of 40 mm, and inner surfaces of the cavities of which could be heated at a predetermined temperature. Further, as raw powders, Fe-1.5% Mo iron base alloy powder having an average particle size of 90 µm and C powder of an average particle size of 20 µm were prepared, and blended and mixed to be Fe-1.5% Mo-0.3% C with a V-shaped blender. Thereby, mixed powders were obtained.

Further, as potassium sulfate salts, there were prepared potassium sulfate, potassium sulfite, potassium thiosulfate, potassium dodecyl sulfate, potassium dodecylbenzene sulfate, food blue No. 1 and potassium ascorbate sulfate ester. Further, as sodium sulfate salts, there were prepared sodium sulfate, sodium sulfite, sodium thiosulfate, sodium dodecyl sulfate, sodium dodecylbenzene sulfate, food blue No. 5 and sodium ascorbate sulfate ester.

These salts were solved into a solvent, water, in a different concentration, and thereby lubricants A to U and a to f denoted in Table 1-1 were obtained.

**Table 1-1**

| Type | | Composition (mass %) | |
|---|---|---|---|
| | | Additives | Balance |
| L u b r i c a n t | A | potassium sulfate: 1 | water |
| | B | potassium sulfite: 1 | |
| | C | potassium thiosulfate: 1 | |
| | D | potassium dodecyl sulfate: 1 | |
| | E | food blue No. 1: 1 | |
| | F | potassium dodecylbenzene sulfate: 1 | |
| | G | potassium ascorbate sulfate ester: 1 | |
| | a | potassium sulfate: 0.001 | |
| | b | potassium sulfate: 3 | |
| | H | sodium sulfate: 1 | |
| | I | sodium sulfite: 1 | |
| | J | sodium thiosulfate: 1 | |
| | K | sodium dodecyl sulfate: 1 | |
| | L | food blue No. 5: 1 | |
| | M | sodium dodecylbenzene sulfate: 1 | |
| | N | sodium ascorbate sulfate ester: 1 | |
| | c | sodium sulfate: 0.001 | |
| | d | sodium sulfate: 3 | |
| | O | potassium sulfate: 0.5, sodium sulfate: 0.5 | |
| | P | potassium sulfite: 0.5, sodium sulfite: 0.5 | |
| | Q | potassium thiosulfate: 0.5, sodium thiosulfate: 0.5 | |
| | R | potassium dodecyl sulfate: 0.5, sodium dodecyl sulfate: 0.5 | |
| | S | food blue No. 1: 0.5, food blue No. 5: 0.5 | |
| | T | potassium dodecylbenzene sulfate: 0.5, sodium dodecylbenzene sulfate: 0.5 | |
| | U | potassium ascorbate sulfate ester: 0.5, sodium ascorbate sulfate ester: 0.5 | |
| | e | potassium sulfate: 0.0005, sodium sulfate: 0.0005 | |
| | f | potassium sulfate: 1.5, sodium sulfate: 1.5 | |

### Embodiment 1-1 For Reference and not within the scope of the invention

The inner surfaces of the cavities of the pressing dies were previously maintained at a temperature of 150°C. Then, the lubricants A to G, a and b shown in Table 1-1 were applied to the inner surfaces of the cavities at a different thickness, and then water was evaporated. Thereby, crystallization layers having a different thickness were formed on the inner surfaces of the cavities, which consisted of potassium sulfate, potassium sulfite, potassium thiosulfate, potassium dodecyl sulfate, potassium dodecylbenzene sulfate, food blue No. 1 and potassium ascorbate sulfate ester.

Meanwhile, into the cavities of the pressing dies formed with the crystallization layers were filled the mixed powders that were obtained by blending the raw powders of Fe-1.5% Mo iron base alloy powder and C powder to be an ingredient composition of Fe-1.5% Mo-0.3% C and mixing the blend with the V-shaped blender, and then the filled powders were pressed at a pressure of 800 MPa. Thereby, powder compacts having a high concentration of potassium (K) layer on their surfaces were formed. These obtained powder compacts having the high concentration of potassium (K) layer on their surfaces were sintered under a gas atmosphere of 5% H₂-N₂ at a temperature of 1150°C, and further subjected to carburizing quenching and tempering. Thereby, iron base sintered alloys 1 to 7 and comparative iron base sintered alloys 1 to 4 were produced, which contained potassium (K) in surface layer portions thereof.

### Conventional Example 1-1

A lubricant that dispersed lithium stearate powder having an average particle size of 5 µm into acetone was applied to the inner surface of the cavity of the pressing die that was heated at 150°C and prepared in Embodiment 1, and then acetone was evaporated. Thereby, a layer of lithium stearic sulfate was formed on the inner surface of the cavity of the pressing die. Then, the iron base alloy mixed powder that had the ingredient composition of Fe-1.5% Mo-0.3% C and was prepared in Embodiment 1-1 was filled into the cavity of the pressing die, and was pressed at 800 MPa, thereby being formed into a powder compact. The powder compact was drawn out and sintered under a gas atmosphere of 5% H₂-N₂ at a temperature of 1150°C. Thereby, a conventional iron base sintered alloy 1 was produced.

In the iron base sintered alloys 1 to 7, the comparative iron base sintered alloys 1 to 4, and the conventional iron base sintered alloy 1, thickness and average concentration of K in the surface layer portion thereof were measured by EPMA (Electron Probe Microanalysis). The measured results were shown in Table 1-2. Further, Rockwell hardness, open porosity and alloy's density in the surfaces of these alloys were measured. The measured results were shown in Table 1-2.

**Table 1-2**

| Fe base sintered alloy | | Lubricant in Table 1 | Fe base sintered alloy surface layer portion | | | | Density of alloy (Mg/m³) |
|---|---|---|---|---|---|---|---|
| | | | Thickness (mm) | Average conc. of K in surface layer portion (mass %) | Rockwell hardness of surface layer (HRA) | Open porosity (%) | |
| Reference examples | 1 | A | 0.003 | 0.0003 | 83 | 4.9 | 7.4 |
| | 2 | B | 0.07 | 0.06 | 84 | 2.5 | 7.4 |
| | 3 | C | 0.3 | 0.3 | 86 | 0.8 | 7.41 |
| | 4 | D | 0.5 | 0.5 | 86 | 0.6 | 7.4 |
| | 5 | E | 1.2 | 1.2 | 84 | 0.3 | 7.39 |
| | 6 | F | 1.8 | 1.8 | 83 | 0.1 | 7.41 |
| | 7 | G | 0.15 | 0.15 | 86 | 1.0 | 7.4 |
| Comparative examples | 1 | a | 1 | Less than 0.0001 * | 76 | 7.0 | 7.41 |
| | 2 | b | 1 | 1.2 * | 70 | 0.9 | 7.4 |
| | 3 | A | 0.0005 * | 0.5 | 75 | 6.5 | 7.39 |
| | 4 | A | 2.2 * | 0.5 | 71 | 1.3 | 7.41 |
| Related art 1 | | | | | 75 | 7.1 | 7.41 |

| | | | | | | | |
|---|---|---|---|---|---|---|---|
| '*' indicates values outside the range of the invention. | | | | | | | |

It could be seen from the results shown in Table 1-2 that the iron base sintered alloys 1 to 7 which were produced by use of the lubricant solving the potassium sulfate salt into the solvent were substantially same in density as compared with the conventional iron base sintered alloy 1 which was produced by use of the lubricant dispersing the lithium stearate powder into acetone, but that, because the iron base sintered alloys 1 to 7 all were high in surface hardness and were also remarkably reduced in surface open porosity, they had dense surface and excellent surface wear resistance. However, it could be seen from the results shown in Table 1-2 that some of the comparative iron base sintered alloys 1 to 4 having a value beyond a range of the invention showed an unfavorable characteristic.

### Embodiment 1-2 For Reference and not within the scope of the invention.

The inner surfaces of the cavities of the pressing dies were previously maintained at a temperature of 150°C. Then, the lubricants H to N, c and d shown in Table 1-1 were applied to the inner surfaces of the cavities at a different thickness, and then water was evaporated. Thereby, crystallization layers having a different thickness were formed on the inner surfaces of the cavities, which consisted of disodium hydrogen sulfate, trisodium sulfate, polysodium sulfate, and sodium riboflavin sulfate.

Meanwhile, into the cavities of the pressing dies formed with the crystallization layers were filled the mixed powders obtained by blending the raw powders of Fe-1.5% Mo iron base alloy powder and C powder to be an ingredient composition of Fe-1.5% Mo-0.3% C and mixing the blend with the V-shaped blender, and then the filled powders were pressed at a pressure of 800 MPa. Thereby, powder compacts having a high concentration of sodium (Na) layer on their surfaces were formed. These powder compacts having the high concentration of sodium (Na) layer on their surfaces were sintered under a gas atmosphere of 5% H₂-N₂ at a temperature of 1150°C, and further subjected to carburizing quenching and tempering. Thereby, iron base sintered alloys 8 to 14 and comparative iron base sintered alloys 5 to 8 were produced, which were shown in Table 1-3 and had an average concentration of Na in iron base sintered alloy surface layer portion.

In the iron base sintered alloys 8 to 14 and the comparative iron base sintered alloys 5 to 8, thickness and average concentration of Na in the surface layer portion thereof were measured by EPMA. The measured results were shown in Table 1-3. Further, Rockwell hardness, open porosity and alloy's density in the surfaces of these alloys were measured. The measured results were shown in Table 1-3.

**Table 1-3**

| Fe base sintered alloy | | Lubricant in Table 1 | Fe base sintered alloy surface layer portion | | | | Density of alloy (Mg/m³) |
|---|---|---|---|---|---|---|---|
| | | | Thickness (mm) | Average conc. of Na in surface layer portion (mass %) | Rockwell hardness of surface layer (HRA) | Open porosity (%) | |
| Reference examples | 8 | H | 0.003 | 0.003 | 83 | 4.2 | 7.4 |
| | 9 | I | 0.07 | 0.06 | 84 | 1.8 | 7.42 |
| | 10 | J | 0.3 | 0.3 | 86 | 0.8 | 7.39 |
| | 11 | K | 0.5 | 0.5 | 87 | 0.4 | 7.39 |
| | 12 | L | 1.2 | 1.2 | 85 | 0.2 | 7.39 |
| | 13 | M | 1.8 | 1.8 | 84 | 0.1 | 7.4 |
| | 14 | N | 0.15 | 0.15 | 86 | 0.9 | 7.41 |
| Comparative examples | 5 | c | 1 | Less than 0.0001* | 75 | 7.4 | 7.39 |
| | 6 | d | 1 | 1.2* | 72 | 0.6 | 7.39 |
| | 7 | H | 0.0005* | 0.5 | 74 | 6.6 | 7.4 |
| | 8 | H | 2.2* | 0.5 | 70 | 0.5 | 7.39 |

| | | | | | | | |
|---|---|---|---|---|---|---|---|
| '*' indicates values outside the range of the invention. | | | | | | | |

It could be seen from the results shown in Table 1-3 that the iron base sintered alloys 8 to 14 which were produced by use of the lubricant solving the potassium sulfate salt into the solvent were substantially same in density as compared with the conventional iron base sintered alloy 1 of Table 1-1 which was produced by use of the lubricant dispersing the lithium stearate powder into acetone, but that, because the iron base sintered alloys 8 to 14 all were high in surface hardness and were also remarkably reduced in surface open porosity, they had dense surface and excellent surface wear resistance. However, it could be seen from the results shown in Table 1-3 that some of the comparative iron base sintered alloys 5 to 8 having a value beyond a range of the invention showed an unfavorable characteristic.

### Embodiment 1-3

The inner surfaces of the cavities of the pressing dies were previously maintained at a temperature of 150°C. Then, the lubricants O to U, e and f shown in Table 1-1 were applied to the inner surfaces of the cavities at a different thickness, and then water was evaporated. Thereby, crystallization layers were formed on the inner surfaces of the cavities, which consisted of a mixed salt of a potassium sulfate salt and a sodium sulfate salt.

Meanwhile, into the cavities of the pressing dies formed with the crystallization layers were filled the mixed powders that were obtained by blending the raw powders of Fe-1.5% Mo iron base alloy powder and C powder to be an ingredient composition of Fe-1.5% Mo-0.3% C and mixing the blend with the V-shaped blender, and then the filled powders were pressed at a pressure of 800 MPa. Thereby, powder compacts having a high concentration of potassium (K) and sodium (Na) layer on their surfaces were formed. These obtained powder compacts having the high concentration of K and Na layer on their surfaces were sintered under a gas atmosphere of 5% H₂-N₂ at a temperature of 1150°C, and further subjected to carburizing quenching and tempering. Thereby, iron base sintered alloys 15 to 21 of the invention and comparative iron base sintered alloys 9 to 12 were produced, which were high in K and Na concentrations in iron base sintered alloy surface layer portions.

In the iron base sintered alloys 15 to 21 of the invention and the comparative iron base sintered alloys 9 to 12, thickness, average concentration of K and average concentration of Na in the iron base sintered alloy surface layer portion were measured by EPMA. The measured results were shown in Table 1-4. Further, Rockwell hardness, open porosity and alloy's density in the surfaces of these alloys were measured. The measured results were shown in Table 1-4.

**Table 1-4**

| Fe base sintered alloy | | Lubricant in Table 1 | Fe base sintered alloy surface layer portion | | | | | Density of alloy (Mg/m³) |
|---|---|---|---|---|---|---|---|---|
| | | | Thickness (mm) | Average concentration in surface layer portion (mass %) | | Rockwell hardness of surface layer (HRA) | Open porosity (%) | |
| | | | | K | Na | | | |
| Invention | 15 | O | 0.003 | 0.0015 | 0.0015 | 83 | 7.4 | 7.41 |
| | 16 | P | 0.07 | 0.03 | 0.03 | 85 | 1.9 | 7.41 |
| | 17 | Q | 0.3 | 0.15 | 0.15 | 86 | 0.4 | 7.38 |
| | 18 | R | 0.5 | 0.25 | 0.25 | 87 | 0.3 | 7.39 |
| | 19 | S | 1.2 | 0.3 | 0.3 | 84 | 0.2 | 7.4 |
| | 20 | T | 1.8 | 0.45 | 0.45 | 83 | 0.1 | 7.41 |
| | 21 | U | 0.9 | 0.075 | 0.075 | 87 | 1.3 | 7.42 |
| Comparative examples | 9 | e | 1 | Less than 0.0001* | Less than 0.0001* | 75 | 7.2 | 7.4 |
| | 10 | f | 1 | 0.6* | 0.6* | 72 | 0.2 | 7.4 |
| | 11 | O | 0.0005* | 0.25 | 0.25 | 74 | 6.8 | 7.4 |
| | 12 | O | 2.2* | 0.25 | 0.25 | 71 | 0.1 | 7.41 |

| | | | | | | | | |
|---|---|---|---|---|---|---|---|---|
| '*' indicates values outside the range of the invention. | | | | | | | | |

It could be seen from the results shown in Table 1-4 that the iron base sintered alloys 15 to 21 of the invention which were produced by use of the lubricant solving the mixed salt of the potassium sulfate salt and sodium sulfate salt into the solvent were substantially same in density as compared with the conventional iron base sintered alloy 1 of Table 1-1 which was produced by use of the lubricant dispersing the lithium stearate powder into acetone, but that, because the iron base sintered alloys 15 to 21 of the invention all were high in surface hardness and were also remarkably reduced in surface open porosity, they had dense surface and excellent surface wear resistance. However, it could be seen from the results shown in Table 1-4 that some of the comparative iron base sintered alloys 9 to 12 having a value beyond a range of the invention showed an unfavorable characteristic.

### Embodiment 2

Pressing dies were prepared, each of which had a cavity of a diameter of 11 mm and a height of 40 mm, and inner surfaces of the cavities of which could be heated at a predetermined temperature. Further, as raw powders, F-1.5% Mo iron base alloy powder having an average particle size of 90 µm and C powder of an average particle size of 20 µm were prepared, and blended and mixed to be Fe-1.5% Mo-0.3% C with a v-shaped blender. Thereby, mixed powders were obtained. A content of phosphor (P) which was contained in the mixed powders was 0.01%.

Further, there were prepared dipotassium hydrogen phosphate, tripotassium phosphate, polypotassium phosphate, potassium riboflavin phosphate, disodium hydrogen phosphate, trisodium phosphate, polysodium phosphate, sodium riboflavin phosphate, and these salts were solved into a solvent, water, in a different concentration. Thereby, lubricants A to L and a to f denoted in Table 2-1 were obtained.

**Table 2-1**

| Type | | Composition (Mass %) | |
|---|---|---|---|
| | | Additives | Balance |
| L u b r i c a n t | A | dipotassium hydrogen phosphate: 0.1 | water |
| | B | tripotassium phosphate: 0.5 | |
| | C | polypotassium phosphate: 1 | |
| | D | potassium riboflavin phosphate: 10 | |
| | a | dipotassium hydrogen phosphate: 0.001 | |
| | b | tripotassium phosphate: 20 | |
| | E | disodium hydrogen phosphate: 0.1 | |
| | F | trisodium phosphate: 0.5 | |
| | G | polysodium phosphate: 1 | |
| | H | sodium riboflavin phosphate: 10 | |
| | C | disodium hydrogen phosphate: 0.001 | |
| | d | trisodium phosphate: 30 | |
| | I | dipotassium hydrogen phosphate: 0.3, trisodium phosphate: 0.3 | |
| | J | tripotassium phosphate: 0.5, sodium riboflavin phosphate: 0.5 | |
| | K | potassium riboflavin phosphate: 1, polysodium phosphate: 1 | |
| | L | polypotassium phosphate: 3, disodium hydrogen phosphate: 3 | |
| | e | dipotassium hydrogen phosphate: 0.0005, trisodium phosphate: 0.0005 | |
| | f | dipotassium hydrogen phosphate: 15, trisodium phosphate: 15 | |

### Embodiment 2-1 For Reference and not within the scope of the invention.

The inner surfaces of the cavities of the pressing dies were previously maintained at a temperature of 150°C. Then, the lubricants A to D, a and b shown in Table 2-1 were applied to the inner surfaces of the cavities at a different thickness, and then water was evaporated. Thereby, crystallization layers having a different thickness were formed on the inner surfaces of the cavities, which consisted of dipotassium hydrogen phosphate, tripotassium phosphate, polypotassium phosphate, potassium riboflavin phosphate.

Meanwhile, into the cavities of the pressing dies formed with the crystallization layers were filled the mixed powders that were obtained by blending the raw powders of Fe-1.5% Mo iron base alloy powder and C powder to be an ingredient composition of Fe-1.5% Mo-0.3% C and mixing the blend with the V-shaped blender, and then the filled powders were pressed at a pressure of 800 MPa. Thereby, powder compacts having a high concentration of phosphor (P) and potassium (K) layer on their surfaces were formed. These obtained powder compacts having the high concentration of P and K layer on their surfaces were sintered under a gas atmosphere of 5% H₂-N₂ at a temperature of 1150°C, and further subjected to carburizing quenching and tempering. Thereby, iron base sintered alloys 1 to 4 and comparative iron base sintered alloys 1 to 4 were produced, which were high in P and K concentrations in the iron base sintered alloy surface layer portions.

### Conventional Example 2-1

A lubricant that dispersed lithium stearate powder having an average particle size of 5 µm into acetone was applied to the inner surface of the cavity of the pressing die that was heated at 150°C and prepared in Embodiment 2-1, and then acetone was evaporated. Thereby, a layer of lithium stearate was formed on the inner surface of the cavity of the pressing die. Then, the iron base alloy mixed powder that had the ingredient composition of Fe-1.5% Mo-0.3% C and was prepared in Embodiment 2-1 was filled into the cavity of the pressing die, and was pressed at 800 MPa, thereby being formed into a powder compact. The powder compact was drawn out and sintered under a gas atmosphere of 5% H₂-N₂ at a temperature of 1150°C. Thereby, a conventional iron base sintered alloy 1 was produced.

In the iron base sintered alloys 1 to 4, the comparative iron base sintered alloys 1 to 4, and the conventional iron base sintered alloy 1, an average concentration of P and an average concentration of K in the iron base sintered alloy surface layer portions of the iron base sintered alloys, as well as a concentration difference of P that extracted a concentration of P in the iron base sintered alloy inner portions from the average concentration of P were measured, and the measured results were shown in Table 2-2. Further, Rockwell hardness, open porosity and alloy's density in the surfaces of the iron base sintered alloys were measured, and the measured results were shown in Table 2-2.

**Table 2-2**

| Fe base sintered alloy | | Lubricant in Table 1 | Fe base sintered alloy surface layer portion | | | | | | Density of alloy (Mg/m³) |
|---|---|---|---|---|---|---|---|---|---|
| | | | Average conc. of P in surface layer portion (mass % ) | Average conc. of P - conc. of inside P (mass % ) | Average conc. of K in surface layer portion (mass % ) | Thickness (mm) | Rockwell hardness of surface layer (HRA) | Open porosity (%) | |
| Reference examples | 1 | A | 0.03 | 0.02 | 0.0002 | 0.03 | 81 | 4.8 | 7.39 |
| | 2 | B | 0.14 | 0.13 | 0.021 | 0.6 | 83 | 0.9 | 7.39 |
| | 3 | C | 0.33 | 0.32 | 0.053 | 1.3 | 85 | 0.6 | 7.4 |
| | 4 | D | 0.95 | 0.94 | 0.47 | 1.8 | 86 | 0.2 | 7.4 |
| Comparative examples | 1 | a | 0.015 | 0.005* | Less than 0.0001* | 0.002 | 74 | 6.5 | 7.4 |
| | 2 | b | 1.2 | 1.19* | 1.2* | 1.7 | 67 | 0.2 | 7.41 |
| | 3 | A | 0.03 | 0.02 | 0.011 | 0.0005* | 75 | 7.3 | 7.39 |
| | 4 | A | 0.85 | 0.84 | 0.92 | 2.2* | 69 | 0.1 | 7.4 |
| Related art 1 | | | | | | | 75 | 7.1 | 7.41 |

| | | | | | | | | | |
|---|---|---|---|---|---|---|---|---|---|
| '*' indicates values outside the range of the invention. | | | | | | | | | |

It could be seen from the results shown in Table 2-2 that the iron base sintered alloys 1 to 4 which were produced by use of the lubricant solving the metallic salt of potassium phosphate into the solvent were substantially same in density as compared with the conventional iron base sintered alloy 1 which was produced by use of the lubricant dispersing the lithium stearate powder into acetone, but that, because the iron base sintered alloys 1 to 4 all were high in surface hardness and were also remarkably reduced in surface open porosity, they had dense surface and excellent surface wear resistance. However, it could be seen from the results shown in Table 2-2 that some of the comparative iron base sintered alloys 1 to 4 having a value beyond a range of the invention showed an unfavorable characteristic.

Further, with respect to each of the iron base sintered alloys 1 to 4 and the comparative iron base sintered alloys 1 to 4, contents of P and K from its surface toward its center were measured by EPMA. As shown in Table 2-2, it could be seen that an average value of the P concentrations of the iron base sintered alloy surface layer portions was higher than the P concentration in the iron base sintered alloy inner portions, and K was also contained in the iron base sintered alloy surface layer portions.

### Embodiment 2-2 For Reference and not within the scope of the invention.

The inner surfaces of the cavities of the pressing dies were previously maintained at a temperature of 150°C. Then, the lubricants E to H, c and d shown in Table 2-1 were applied to the inner surfaces of the cavities at a different thickness, and then water was evaporated. Thereby, crystallization layers having a different thickness were formed on the inner surfaces of the cavities, which consisted of disodium hydrogen phosphate, trisodium phosphate, polysodium phosphate, sodium riboflavin phosphate.

Meanwhile, into the cavities of the pressing dies formed with the crystallization layers were filled the mixed powders that were obtained by blending the raw powders of Fe-1.5% Mo iron base alloy powder and C powder to be an ingredient composition of Fe-1.5% Mo-0.3% C and mixing the blend with the V-shaped blender, and then the filled powders were pressed at a pressure of 800 MPa. Thereby, powder compacts having a high concentration of phosphor (P) and sodium (Na) layer on their surfaces were formed. These obtained powder compacts having the high concentration of P and Na layer on their surfaces were sintered under a gas atmosphere of 5% H₂-N₂ at a temperature of 1150°C, and further subjected to carburizing quenching and tempering. Thereby, iron base sintered alloys 5 to 8 and comparative iron base sintered alloys 5 to 8 were produced, which were high in P and Na concentrations in the iron base sintered alloy surface layer portions.

In the iron base sintered alloys 5 to 8 and the comparative iron base sintered alloys 5 to 8, a thickness, an average concentration of P and an average concentration of Na in the iron base sintered alloy surface layer portions of the iron base sintered alloys, as well as a concentration difference of P that extracted a concentration of P in the iron base sintered alloy inner portions from the average concentration of P were measured, and the measured results were shown in Table 2-3. Further, Rockwell hardness, open porosity and alloy's density in the surfaces of the iron base sintered alloys were measured, and the measured results were shown in Table 2-3.

**Table 2-3**

| Fe base sintered alloy | | Lubricant in Table 1 | Fe base sintered alloy surface layer portion | | | | | | Density of alloy (Mg/m³) |
|---|---|---|---|---|---|---|---|---|---|
| | | | Average conc. of P in surface layer portion (mass % ) | Average conc. of P - conc. of inside P (mass % ) | Average conc. of Na in surface layer portion (mass % ) | Thickness (mm) | Rockwell hardnes s of surface layer (HRA) | Open porosity (%) | |
| Reference examples | 5 | E | 0.05 | 0.04 | 0.0006 | 1.2 | 86 | 3.1 | 7.41 |
| | 6 | F | 0.21 | 0.20 | 0.054 | 1.8 | 87 | 0.9 | 7.4 |
| | 7 | G | 0.43 | 0.42 | 0.29 | 0.15 | 85 | 0.4 | 7.41 |
| | 8 | H | 0.96 | 0.95 | 0.94 | 0.42 | 85 | 0.1 | 7.39 |
| Comparatve examples | 5 | c | 0.015 | 0.0005* | Less than 0.0001 | 0.002 | 74 | 6.5 | 7.4 |
| | 6 | d | 1.2 | 1.19* | 1.4 | 1.7 | 67 | 0.2 | 7.41 |
| | 7 | D | 0.03 | 0.02 | 0.002 | 0.0005* | 75 | 7.3 | 7.39 |
| | 8 | D | 0.85 | 0.84 | 0.85 | 2.2* | 69 | 0.1 | 7.4 |

| | | | | | | | | | |
|---|---|---|---|---|---|---|---|---|---|
| '*' indicates values outside the range of the invention | | | | | | | | | |

It could be seen from the results shown in Table 2-3 that the iron base sintered alloys 5 to 8 which were produced by use of the lubricant solving the metallic salt of potassium phosphate into the solvent were substantially same in density as compared with the conventional iron base sintered alloy 1 of Table 2-1 which was produced by use of the lubricant suspending the lithium stearate powder into acetone, but that, because the iron base sintered alloys 5 to 8 all were high in surface hardness and were also remarkably reduced in surface open porosity, they had dense surface and excellent surface wear resistance. However, it could be seen from the results shown in Table 2-3 that some of the comparative iron base sintered alloys 5 to 8 having a value beyond a range of the invention showed an unfavorable characteristic.

Further, with respect to each of the iron base sintered alloys 5 to 8 and the comparative iron base sintered alloys 5 to 8, contents of P and K from its surface toward its center were measured by EPMA. As shown in Table 2-3, it could be seen that an average value of the P concentrations of the iron base sintered alloy surface layer portions was higher than the P concentration in the iron base sintered alloy inner portions, and Na was also contained in the iron base sintered alloy surface layer portions.

### Embodiment 2-3

The inner surfaces of the cavities of the pressing dies were previously maintained at a temperature of 150°C. Then, the lubricants I to L, e and f shown in Table 2-1 were applied to the inner surfaces of the cavities at a different thickness, and then water was evaporated. Thereby, crystallization layers were formed on the inner surfaces of the cavities, which consisted of a mixed salt of a potassium phosphate metallic salt and a sodium phosphate metallic salt.

Meanwhile, into the cavities of the pressing dies formed with the crystallization layers were filled the mixed powders that were obtained by blending the raw powders of Fe-1.5% Mo iron base alloy powder and C powder to be an ingredient composition of Fe-1.5% Mo-0.3% C and mixing the blend with the V-shaped blender, and then the filled powders were pressed at a pressure of 800 MPa. Thereby, powder compacts having a high concentration of phosphor (P), potassium (K) and sodium (Na) layer on their surfaces were formed. These obtained powder compacts having the high concentration of P, K and Na layer on their surfaces were sintered under a gas atmosphere of 5% H₂-N₂ at a temperature of 1150°C, and further subjected to carburizing quenching and tempering. Thereby, iron base sintered alloys 9 to 12 of the invention and comparative iron base sintered alloys 9 to 12 were produced, which were high in P, K and Na concentrations in the iron base sintered alloy surface layer portions.

In the iron base sintered alloys 9 to 12 of the invention and the comparative iron base sintered alloys 9 to 12, an average concentration of P in the iron base sintered alloy surface layer portions thereof and a concentration difference of P that extracted a concentration of P in the iron base sintered alloy inner portions from the average concentration of P in the iron base sintered alloy surface layer portions were measured. Further, an average concentration of K and an average concentration of Na in the iron base sintered alloy surface layer portions were measured. The measured results were shown in Table 2-4. Further, Rockwell hardness, open porosity and alloy's density in the surfaces of the iron base sintered alloys were measured, and the measured results were shown in Table 2-4.

**Table 2-4**

| Fe base sintered alloy | | Lubric ant in Table 1 | Fe base sintered alloy surface layer portion | | | | | | | Density of alloy (Mg/m³ ) |
|---|---|---|---|---|---|---|---|---|---|---|
| | | | Average conc. of P in surface layer portion (mass% ) | Average conc. of P - conc. of inside P (mass % ) | Average concentration (mass %) | | Thickness (mm) | Rockwell hardness of surface layer (HRA) | Open porosity (%) | |
| | | | | | K | Na | | | | |
| Invention | 9 | I | 0.15 | 0.14 | 0.014 | 0.011 | 1.2 | 86 | 0.5 | 7.41 |
| | 10 | J | 0.35 | 0.34 | 0.035 | 0.042 | 1.8 | 87 | 0.4 | 7.4 |
| | 11 | K | 0.49 | 0.48 | 0.21 | 0.18 | 0.15 | 85 | 0.2 | 7.41 |
| | 12 | L | 0.75 | 0.74 | 0.45 | 0.47 | 0.42 | 85 | 0.1 | 7.39 |
| Comparative examples | 9 | e | 0.015 | 0.0005* | Less than 0.0001* | Less than 0.0001* | 0.002 | 74 | 6.5 | 7.4 |
| | 10 | f | 1.2 | 1.19* | 0.63* | 0.63* | 1.7 | 67 | 0.2 | 7.41 |
| | 11 | I | 0.03 | 0.02 | 0.022 | 0.018 | 0.0005* | 75 | 7.3 | 7.39 |
| | 12 | I | 0.85 | 0.84 | 0.92* | 0.94* | 2.2* | 69 | 0.1 | 7.4 |

| | | | | | | | | | | |
|---|---|---|---|---|---|---|---|---|---|---|
| '*' indicates values outside the range of the invention | | | | | | | | | | |

It could be seen from the results shown in Table 2-4 that the iron base-sintered alloys 9 to 12 of the invention produced by use of the lubricant solving the mixed salt of the potassium phosphate metallic salt and sodium phosphate metallic salt into the solvent were substantially same in density as compared with the conventional iron base sintered alloy 1 of Table 2-1 produced by use of the lubricant suspending the lithium stearate powder into acetone, but, because the iron base sintered alloys 9 to 12 of the invention all were high in surface hardness and were also remarkably reduced in surface open porosity, they had dense surface and excellent surface wear resistance. However, it could be seen from the results shown in Table 2-4 that some of the comparative iron base sintered alloys 9 to 12 having a value beyond a range of the invention showed an unfavorable characteristic.

Further, with respect to each of the iron base sintered alloys 9 to 12 of the invention and the comparative iron base sintered alloys 9 to 12, contents of P, K and Na from its surface toward its center were measured by EPMA. As shown in Table 2-4, it could be seen that an average value of the P concentrations of the iron base sintered alloy surface layer portions was higher than the P concentration in the iron base sintered alloy inner portions, and K and Na were also contained in the iron base sintered alloy surface layer portions.

## Claims

1. An iron base sintered alloy having highly densified and hardened surface, comprising:
a surface layer portion of the iron base sintered alloy (hereinafter, referred to as "iron base sintered alloy surface layer portion") having a thickness in a range of 1 µm to 2 mm from a surface of the iron base sintered alloy; and
an inner portion of the iron base sintered alloy (hereinafter, referred to as "iron base sintered alloy inner portion"), which is the portion other than the iron base sintered alloy surface layer portion,
wherein the iron base sintered alloy surface layer portion contains both of potassium (hereinafter, referred to as "K") and sodium (hereinafter, referred to as "Na"), and
an average concentration of both of K and Na contained in the iron base sintered alloy surface layer portion in a range of 0.02 to 0.5 mass% in total.

2. The iron base sintered alloy according to Claim 1, wherein
the iron base sintered alloy inner portion has a composition of C: 0.1 to 0.9 mass%, one or at least two of Mo, Ni, Cr and Cu: 0.1 to 10 mass% in total, and balance: Fe and unavoidable impurities; and
the iron base sintered alloy surface layer portion has a composition of C: 0.1 to 0.9 mass%, one or at least two of Mo, Ni, Cr and Cu: 0.1 to 10 mass% in total, the both of K and Na: 0.02 to 0.5 mass% in the average concentration in total, and balance: Fe and unavoidable impurities.

3. The iron base sintered alloy according to Claim 1, wherein
the iron base sintered alloy inner portion has a composition of C: 0.1 to 0.9 mass%, one or at least two of Mo, Ni, Cr and Cu: 0.1 to 10 mass% in total, one or at least two of Mn, Si, V, Nb, W, Al, Ti, Ca and S: 0.1 to 3 mass% in total, and balance: Fe and unavoidable impurities; and
the iron base sintered alloy surface layer portion has a composition of C: 0.1 to 0.9 mass%, one or at least two of Mo, Ni, Cr and Cu: 0.1 to 10 mass% in total, one or at least two of Mn, Si, V, Nb, W, Al, Ti, Ca and S: 0.1 to 3 mass% in total, the both of K and Na: 0.02 to 0.5 mass% in the average concentration in total, and balance: Fe and unavoidable impurities.

4. The iron base sintered alloy according to Claim 1, wherein
the surface layer portion of the iron base sintered alloy further has an average concentration of phosphor (hereinafter, referred to as "P") higher than a concentration of P contained in the inner portion of the iron base sintered alloy.

5. The iron base sintered alloy according to Claim 4, wherein
the average concentration of P of the iron base sintered alloy surface layer portion is higher than the concentration of P contained in the iron base sintered alloy inner portion by 0.01 to 1 mass%, and the iron base sintered alloy surface layer portion contains the both of K and Na in an average concentration of 0.02 to 0.5 mass% in total.

6. The iron base sintered alloy according to Claim 4 or 5, wherein
the iron base sintered alloy inner portion is made up of an iron base alloy sintered body having a composition of C: 0.1 to 0.9 mass%, one or at least two of Mo, Ni, Cr and Cu: 0.1 to 10 mass% in total, P: 0.05 mass% or less (including 0 mass%), and balance: Fe and unavoidable impurities, and
the iron base sintered alloy surface layer portion has the average concentration of P higher than the concentration of P contained in the iron base sintered alloy inner portion by 0.01 to 1 mass% and contains the both of K and Na in an average concentration of 0.02 to 0.5 mass% in total.

7. The iron base sintered alloy according to Claim 4, wherein
the iron base sintered alloy inner portion is made up of an iron base alloy sintered body having a composition of C: 0.1 to 0.9 mass%, one or at least two of Mo, Ni, Cr and Cu: 0.1 to 10 mass% in total, one or at least two of Mn, Si, V, Nb, W, A1, Ti, Ca and S: 0.1 to 3 mass% in total, P: 0.05 mass% or less (including 0 mass%), and balance: Fe and unavoidable impurities, and
the iron base sintered alloy surface layer portion has the average concentration of P higher than the concentration of P contained in the iron base sintered alloy inner portion by 0.01 to 1 mass% and contains the both of K and Na in an average concentration of 0.02 to 0.5 mass% in total.

8. The iron base sintered alloy according to any one of Claims 1 to 7, wherein the iron base sintered alloy surface layer portion has open porosity of 5% or less.

9. A mechanical part made of the iron base sintered alloy according to any one of Claims 1 to 8.

10. The mechanical part according to Claim 9, wherein the mechanical part is a sprocket, gear, rotor, inner race, or outer race.

11. A production method of the iron base sintered alloy according to any one of Claims 1 to 7 comprising:
forming a mixed coat of a potassium sulfate salt and a sodium sulfate salt, or a coat of a mixed metallic salt of a potassium phosphate metallic salt and a sodium phosphate metallic salt, acting as a lubricant, on an inner surface of a cavity of a pressing die,
wherein the potassium sulfate salt consists of one or at least two of potassium sulfate, potassium sulfite, potassium thiosulfate, potassium dodecyl sulfate, potassium dodecylbenzene sulfate, food blue No. 1 and potassium ascorbate sulfate ester,
wherein the sodium sulfate salt consists of one or at least two of sodium sulfate, sodium sulfite, sodium thiosulfate, sodium dodecyl sulfate, sodium dodecylbenzene sulfate, food blue No. 5, and sodium ascorbate sulfate ester,
wherein the potassium phosphate metallic salt consists of one or at least two of dipotassium hydrogen phosphate, tripotassium phosphate, polypotassium phosphate, and potassium riboflavin phosphate, and
wherein the sodium phosphate metallic salt consists of one or at least two of disodium hydrogen phosphate, trisodium phosphate, polysodium phosphate, and sodium riboflavin phosphate;
filling raw powder of the iron base sintered alloy into the cavity of the pressing die and then pressing the filled raw powder; and
sintering the formed powder compact.

## Patentansprüche

1. Sinterlegierung auf Eisenbasis mit einer hoch verdichteten und gehärteten Oberfläche, umfassend:
einen Oberflächenschichtbereich der Sinterlegierung auf Eisenbasis (nachfolgend als "Oberflächenschichtbereich der Sinterlegierung auf Eisenbasis" bezeichnet) mit einer Dicke in einem Bereich von 1 µm bis 2 mm von der Oberfläche der Sinterlegierung auf Eisenbasis; und
einen inneren Bereich der Sinterlegierung auf Eisenbasis (nachfolgend als "Innenbereich der Sinterlegierung auf Eisenbasis" bezeichnet), der ein anderer Bereich als der Oberflächenschichtbereich der Sinterlegierung auf Eisenbasis ist,
wobei der Oberflächenschichtbereich der Sinterlegierung auf Eisenbasis sowohl Kalium (nachfolgend als "K" bezeichnet) und Natrium (nachfolgend als "Na" bezeichnet) enthält und
die durchschnittliche Konzentration von sowohl K als auch Na, die in dem Oberflächenschichtbereich der Sinterlegierung auf Eisenbasis vorhanden sind, in einem Bereich von insgesamt 0,02 bis 0,5 Massen% liegt.

2. Sinterlegierung auf Eisenbasis gemäß Anspruch 1, wobei
der Innenbereich der Sinterlegierung auf Eisenbasis eine Zusammensetzung aus C: 0,1 bis 0,9 Massen%, eines oder mindestens zwei aus Mo, Ni, Cr und Cu: insgesamt 0,1 bis 10 Massen% und als Ausgleich: Fe und unvermeidbare Verunreinigungen aufweist; und
der Oberflächenschichtbereich der Sinterlegierung auf Eisenbasis eine Zusammensetzung aus C: 0,1 bis 0,9 Massen%, eines oder mindestens zwei aus Mo, Ni, Cr und Cu: insgesamt 0,1 bis 10 Massen%, sowohl K als auch Na: in der durchschnittlichen Konzentration von insgesamt 0,02 bis 0,5 Massen% und als Ausgleich: Fe und unvermeidbare Verunreinigungen aufweist.

3. Sinterlegierung auf Eisenbasis gemäß Anspruch 1, wobei
der Innenbereich der Sinterlegierung auf Eisenbasis eine Zusammensetzung aus C: 0,1 bis 0,9 Masen%, eines oder mindestens zwei aus Mo, Ni, Cr und Cu: insgesamt 0,1 bis 10 Massen%, eines oder mindestens zwei aus Mn, Si, V, Nb, W, Al, Ti, Ca und S: insgesamt 0,1 bis 3 Massen% und als Ausgleich: Fe und unvermeidbare Verunreinigungen aufweist; und
der Oberflächenschichtbereich der Sinterlegierung auf Eisenbasis eine Zusammensetzung aus C: 0,1 bis 0,9 Massen%, eines oder mindestens zwei aus Mo, Ni, Cr und Cu: insgesamt 0,1 bis 10 Massen%, eines oder mindestens zwei aus Mn, Si, V, Nb, W, Al, Ti, Ca und S: insgesamt 0,1 bis 3 Massen%, sowohl K als auch Na: in der durchschnittlichen Konzentration von insgesamt 0,02 bis 0,5 Massen% und als Ausgleich: Fe und unvermeidbare Verunreinigungen aufweist.

4. Sinterlegierung auf Eisenbasis gemäß Anspruch 1, wobei der Oberflächenschichtbereich der Sinterlegierung auf Eisenbasis ferner eine durchschnittliche Konzentration von Phosphor (nachfolgend als "P" bezeichnet) aufweist, die höher ist als die Konzentration von P, welcher im Innenbereich der Sinterlegierung auf Eisenbasis enthalten ist.

5. Sinterlegierung auf Eisenbasis gemäß Anspruch 4, wobei die durchschnittliche Konzentration von P des Oberflächenschichtbereichs der Sinterlegierung auf Eisenbasis um 0,01 bis 1 Massen% höher ist als die Konzentration von P, welcher in dem Innenbereich der Sinterlegierung auf Eisenbasis enthalten ist, und der Oberflächenschichtbereich der Sinterlegierung auf Eisenbasis sowohl K als auch Na in einer durchschnittlichen Konzentration von insgesamt 0,02 bis 0,5 Massen% enthält.

6. Sinterlegierung auf Eisenbasis gemäß Anspruch 4 oder 5, wobei
der Innenbereich der Sinterlegierung auf Eisenbasis aus einem Sinterkörper einer Eisenbasislegierung besteht, der eine Zusammensetzung aus C: 0,1 bis 0,9 Massen%, eines oder mindestens zwei aus Mo, Ni, Cr und Cu: insgesamt 0,1 bis 10 Massen%, P: 0,05 Massen% oder weniger (einschließlich 0 Massen%) und als Ausgleich: Fe und unvermeidbare Verunreinigungen aufweist, und
der Oberflächenschichtbereich der Sinterlegierung auf Eisenbasis eine durchschnittliche Konzentration von P aufweist, die um 0,01 bis 1 Massen% höher ist als die Konzentration von P, welcher in dem Innenbereich der Sinterlegierung auf Eisenbasis enthalten ist, und sowohl K als auch Na in einer durchschnittlichen Konzentration von insgesamt 0,02 bis 0,5 Massen% enthält.

7. Sinterlegierung auf Eisenbasis gemäß Anspruch 4, wobei
der Innenbereich der Sinterlegierung auf Eisenbasis aus einem Sinterkörper einer Eisenbasislegierung besteht, der eine Zusammensetzung aus C: 0,1 bis 0,9 Massen%, eines oder mindestens zwei aus Mo, Ni, Cr und Cu: insgesamt 0,1 bis 10 Massen%, eines oder mindestens zwei aus Mn, Si, V, Nb, W, Al, Ti, Ca und S: insgesamt 0,1 bis 3 Massen%, P: 0,05 Massen% oder weniger (einschließlich 0 Massen%) und als Ausgleich: Fe und unvermeidbare Verunreinigungen aufweist, und
der Oberflächenschichtbereich der Sinterlegierung auf Eisenbasis eine durchschnittliche Konzentration von P aufweist, die um 0,01 bis 1 Massen% höher ist als die Konzentration von P, welcher in dem Innenbereich der Sinterlegierung auf Eisenbasis enthalten ist, und sowohl K als auch Na in einer durchschnittlichen Konzentration von insgesamt 0,02 bis 0,5 Massen% enthält.

8. Sinterlegierung auf Eisenbasis gemäß einem der Ansprüche 1 bis 7, wobei der Oberflächenschichtbereich der Sinterlegierung auf Eisenbasis eine offene Porosität von 5 % oder weniger aufweist.

9. Mechanisches Teil, das aus der Sinterlegierung auf Eisenbasis gemäß einem der Ansprüche 1 bis 8 hergestellt ist.

10. Mechanisches Teil gemäß Anspruch 9, wobei das mechanische Teil ein Kettenrad, Zahnrad, Rotor, Innenring oder Außenring ist.

11. Herstellungsverfahren der Sinterlegierung auf Eisenbasis gemäß einem der Ansprüche 1 bis 7, umfassend:
Bilden einer gemischten Schicht aus einem Kaliumsulfatsalz und einem Natriumsulfatsalz oder einer Schicht eines gemischten Metallsalzes aus einem Kaliumphosphatmetallsalz und einem Natriumphosphatmetallsalz, die als Schmiermittel wirkt, auf der Innenfläche eines Hohlraums eines Presswerkzeugs,
wobei das Kaliumsulfatsalz aus einem oder mindestens zwei von Kaliumsulfat, Kaliumsulfit, Kaliumthiosulfat, Kaliumdodecylsulfat, Kaliumdodecylbenzolsulfat, Lebensmittelblau Nr. 1 und Kaliumascorbatsulfatester besteht,
wobei das Natriumsulfatsalz aus einem oder mindestens zwei von Natriumsulfat, Natriumsulfit, Natriumthiosulfat, Natriumdodecylsulfat, Natriumdodecylbenzolsulfat, Lebensmittelblau Nr. 5 und Natriumascorbatsulfatester besteht,
wobei das Kaliumphosphatmetallsalz aus einem oder mindestens zwei von Dikaliumhydrogenphosphat, Trikaliumphosphat, Polykaliumphosphat und Kaliumriboflavinphosphat besteht, und
wobei das Natriumphosphatmetallsalz aus einem oder mindestens zwei von Dinatriumhydrogenphosphat, Trinatriumphosphat, Polynatriumphosphat und Natriumriboflavinphosphat besteht;
Füllen des Rohpulvers der Sinterlegierung auf Eisenbasis in den Hohlraum des Presswerkzeugs und dann Pressen des eingefüllten Rohpulvers; und
Sintern des gebildeten Pulverpresslings.

## Revendications

1. Alliage fritté à base de fer ayant une surface hautement densifiée et durcie, comprenant :
une partie de couche de surface de l'alliage fritté à base de fer (ci-après, désignée par « partie de couche de surface de l'alliage fritté à base de fer ») ayant une épaisseur dans une plage allant de 1 µm à 2 mm à partir d'une surface de l'alliage fritté à base de fer ; et
une partie interne de l'alliage fritté à base de fer (ci-après, désignée par « partie interne de l'alliage fritté à base de fer »), qui constitue la partie autre que la partie de couche de surface de l'alliage fritté à base de fer,
où la partie de couche de surface de l'alliage fritté à base de fer contient à la fois du potassium (ci-après désigné par « K ») et du sodium (ci-après désigné par « Na »), et
une concentration moyenne de K et Na présents dans la partie de couche de surface de l'alliage fritté à base de fer dans une plage allant de 0,02 à 0,5% en masse au total.

2. Alliage fritté à base de fer selon la revendication 1, dans lequel
la partie interne de l'alliage fritté à base de fer a la composition suivante : C : 0,1 à 0,9% en masse, un élément ou au moins deux éléments parmi Mo, Ni, Cr et Cu : 0,1 à 10% en masse au total, et le reste : Fe et des impuretés inévitables ; et
la partie de couche de surface de l'alliage fritté à base de fer a la composition suivante : C : 0,1 à 0,9% en masse, un élément ou au moins deux éléments parmi Mo, Ni, Cr et Cu : 0,1 à 10% en masse au total, K et Na : 0,02 à 0,5% en masse à la concentration moyenne au total, et le reste : Fe et des impuretés inévitables.

3. Alliage fritté à base de fer selon la revendication 1, dans lequel
la partie interne de l'alliage fritté à base de fer a la composition suivante : C : 0,1 à 0,9% en masse, un élément ou au moins deux éléments parmi Mo, Ni, Cr et Cu : 0,1 à 10% en masse au total, un élément ou au moins deux éléments parmi Mn, Si, V, Nb, W, Al, Ti, Ca et S : 0,1 à 3% en masse au total, et le reste : Fe et des impuretés inévitables ; et
la partie de couche de surface de d'alliage fritté à base de fer a la composition suivante : C : 0,1 à 0,9% en masse, un élément ou au moins deux éléments parmi Mo, Ni, Cr et Cu : 0,1 à 10% en masse au total, un élément ou au moins deux éléments parmi Mn, Si, V, Nb, W, Al, Ti, Ca et S : 0,1 à 3% en masse au total, K et Na : 0,02 à 0,5% en masse à la concentration moyenne au total, et le reste : Fe et des impuretés inévitables.

4. Alliage fritté à base de fer selon la revendication 1, dans lequel
la partie de couche de surface de l'alliage fritté à base de fer a en outre une concentration moyenne de phosphore (ci-après, désigné par « P ») supérieure à une concentration de P présent dans la partie interne de l'alliage fritté base de fer.

5. Alliage fritté à base de fer selon la revendication 4, dans lequel
la concentration moyenne de P de la partie de couche de surface de l'alliage fritté à base de fer est supérieure à la concentration de P présent dans la partie interne de l'alliage fritté à base de fer de 0,01 à 1% en masse, et la partie de couche de surface de l'alliage fritté à base de fer contient K et Na à une concentration moyenne allant de de 0,02 à 0,5% en masse au total.

6. Alliage fritté à base de fer selon la revendication 4 ou 5, dans lequel
la partie interne de l'alliage fritté à base de fer est constituée d'un corps fritté de l'alliage à base de fer ayant la composition suivante : C : 0,1 à 0,9% en masse, un élément ou au moins deux éléments parmi Mo, Ni, Cr et Cu : 0,1 à 10% en masse au total, P : 0,05% en masse ou moins (y compris 0% en masse), et le reste : Fe et des impuretés inévitables, et
la partie de couche de surface de l'alliage fritté à base de fer a la concentration moyenne de P supérieure à la concentration de P présent dans la partie interne de l'alliage fritté à base de fer de 0,01 à 1% en masse et contient K et Na à une concentration moyenne de 0,02 à 0,5% en masse au total.

7. Alliage fritté à base de fer selon la revendication 4, dans lequel
la partie interne de l'alliage fritté à base de fer est constituée d'un corps fritté de l'alliage à base de fer ayant la composition suivante : C : 0,1 à 0,9% en masse, un élément ou au moins deux éléments parmi Mo, Ni, Cr et Cu : 0,1 à 10% en masse au total, un élément ou au moins deux éléments parmi Mn, Si, V, Nb, W, Al, Ti, Ca et S : 0,1 à 3% en masse au total, P : 0,05% en masse ou moins (y compris 0% en masse), et le reste : Fe et des impuretés inévitables, et
la partie de couche de surface de l'alliage fritté à base de fer a la concentration moyenne de P supérieure à la concentration de P présent dans la partie interne de l'alliage fritté à base de fer de 0,01 à 1% en masse et contient K et Na à une concentration moyenne de 0,02 à 0,5% en masse au total.

8. Alliage fritté à base de fer selon l'une quelconque des revendications 1 à 7, dans lequel la partie de couche de surface de l'alliage fritté à base de fer présente une porosité ouverte inférieure ou égale à 5%.

9. Pièce mécanique réalisée en alliage fritté à base de fer selon l'une quelconque des revendications 1 à 8.

10. Pièce mécanique selon la revendication 9, dans laquelle la pièce mécanique est un pignon, un engrenage, un rotor, une bague intérieure, ou une bague extérieure.

11. Procédé de production de l'alliage fritté à base de fer selon l'une quelconque des revendications 1 à 7, comprenant le fait :
de former un revêtement mixte d'un sel de sulfate de potassium et d'un sel de sulfate de sodium, ou un revêtement d'un sel métallique mixte d'un sel métallique de phosphate de potassium et d'un sel métallique de phosphate de sodium, agissant en tant que lubrifiant, sur une surface interne d'une cavité d'une matrice de pressage,
où le sel de sulfate de potassium est constitué d'un élément ou d'au moins deux éléments parmi le sulfate de potassium, le sulfite de potassium, le thiosulfate de potassium, le dodécylsulfate de potassium, le dodécylbenzène-sulfate de potassium, le bleu alimentaire No. 1 et l'ester de sulfate d'ascorbate de potassium,
où le sel de sulfate de sodium est constitué d'un élément ou d'au moins deux éléments parmi le sulfate de sodium, le sulfite de sodium, le thiosulfate de sodium, le dodécylsulfate de sodium, le dodécylbenzène-sulfate de sodium, le bleu alimentaire No. 5, et l'ester de sulfate d'ascorbate de sodium,
où le sel métallique de phosphate de potassium est constitué d'un élément ou d'au moins deux éléments parmi l'hydrogénophosphate de dipotassium, le phosphate de tripotassium, le phosphate de polypotassium, et le phosphate de riboflavine de potassium, et
où le sel métallique de phosphate de sodium est composé d'un élément ou d'au moins deux éléments parmi l'hydrogénophosphate de disodium, le phosphate de trisodium, le phosphate de polysodium, et le phosphate de riboflavine de sodium ;
de remplir la cavité de la matrice de pressage avec une poudre brute de l'alliage fritté à base de fer et de presser ensuite la poudre brute remplissant la cavité ; et
de fritter la poudre compacte formée.
